(19) **Europäisches Patentamt**
**European Patent Office**
**Office européen des brevets**

(11) **EP 0 845 661 A1**

(12) **EUROPÄISCHE PATENTANMELDUNG**

(43) Veröffentlichungstag:
**03.06.1998 Patentblatt 1998/23**

(51) Int. Cl.⁶: **G01F 1/66**

(21) Anmeldenummer: **97120637.0**

(22) Anmeldetag: **25.11.1997**

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **28.11.1996 DE 19649437**

(71) Anmelder:
**SIEMENS AKTIENGESELLSCHAFT**
**80333 München (DE)**

(72) Erfinder:
**Reissinger, Achim, Dipl.-Ing. (FH)**
**91522 Ansbach (DE)**

(54) **Verfahren und Anordnung zur Messung der Fliessgeschwindigkeit eines Mediums**

(57) Um einen vereinfachten Aufbau einer Anordnung (1a,1b,1c) zur Messung der Fließgeschwindigkeit eines fließenden Mediums zu erzielen, ist vorgesehen, daß lediglich ein Schallkopf (7) zum Einsatz kommt. Sein Schallsignal wird dabei über einen Doppelreflektor (11) geführt, derart, daß quasi ein ringförmig geschlossener Schallweg (13, 13b, 13c) mit einander entgegengerichteten Schallsignalen gegeben ist.

FIG 1

EP 0 845 661 A1

**Beschreibung**

Die Erfindung betrifft ein verfahren und eine Anordnung zur Messung der Fließgeschwindigkeit eines Mediums mittels Ultraschall.

Zur Ermittlung der Fließgeschwindigkeit eines Mediums, insbesondere einer Flüssigkeit oder eines Gases, ist es aus dem Stand der Technik bekannt, diese mit Ultraschall zu messen. Dabei wird entlang einer Wegstrecke des fließenden Mediums dieses mit einem Ultraschallsignal mit und gegen die Fließrichtung durchschallt. Aus den Laufzeiten in Hin- und Gegenrichtung wird dann die Fließgeschwindigkeit errechnet. In der Regel dient die Fließgeschwindigkeit zur Ermittlung des durchfließenden Mediumvolumens.

Zusammen mit einem Temperaturwert kann die Fließgeschwindigkeit dabei auch zur Ermittlung einer Wärmemenge, z.B. für eine Heizkostenermittlung, dienen. Eine derartige Anwendung ist aus der Veröffentlichung FRITSCH, Gerhard: Wärmemengenzähler für Heizkörper, Physik in unserer Zeit/15. Jahrgang 1984/Nr. 4, Seiten 97-99, bekannt. Dort wird ein W-förmiger Schallweg mit einem Sender und einem Empfänger verwendet.

Allgemein ist diese Technik in dem Aufsatz "Durchflußmeßtechnik - eine Übersicht", in Technisches Messen tm, 1979, Heft 4, Seiten 145 bis 149, beschrieben. Dazu ist es bekannt, einen sendenden und einen empfangenden Ultraschallkopf zu verwenden. Die Ultraschallköpfe dienen dabei als Sender und Empfänger und benötigen eine Sende-/Empfangseinrichtung. Eine derartige Meßeinrichtung ist beispielsweise aus der EP 0 535 364 A1 bekannt.

Aus der EP 0 566 859 B1 ist eine Anordnung bekannt, bei der ein runder Meßkanal zur Anwendung kommt. Dabei wird ggf. nur ein doppelseitig abstrahlender Schallkopf benötigt. Bei dieser Ausführung ist die Schallführung innerhalb des gebogenen Meßkanals problematisch.

Aus der WO 95/19 559 A2 ist ein Verfahren zur Messung der Fließgeschwindigkeit eines Mediums bekannt, bei dem ein Ultraschallsignal an einem ersten Ort erzeugt wird. Das erste Ultraschallsignal wird in zwei Teilsignale aufgeteilt, welche in zwei unterschiedliche Richtungen umgelenkt werden. Diese Teilsignale werden dann einander entgegengerichtet auf einem Schallweg, der innerhalb des Mediums liegt, geführt, wobei nachfolgend aus den beiden empfangenen Teilsignalen die Fließgeschwindigkeit ermittelt wird.

Aus dieser Druckschrift ist weiterhin eine Anordnung mit einem Ultraschallkopf, einem Doppelreflektor und einem Meßrohr bekannt, wobei ein Ultraschallsignal des Ultraschallkopfes zur Erzeugung zweier Teilsignale auf den Doppelreflektor gerichtet wird, und wobei das Meßrohr zwei weitere Reflektoren umfaßt, die zusammen mit dem Doppelreflektor einen Schallweg bilden, der teilweise innerhalb des Meßrohres im Medium verläuft.

Der Erfindung liegt die Aufgabe zugrunde, ein Verfahren und eine Anordnung zur Messung der Fließgeschwindigkeit eines Mediums anzugeben, wobei nur wenige aktive Bauteile und ein einfach herstellbares Meßrohr benötigt werden sollen.

Diese Aufgabe wird erfindungsgemäß gelöst mit einem Verfahren zur Messung der Fließgeschwindigkeit eines Mediums mit folgenden Schritten:

- es wird ein erstes Ultraschallsignal an einem ersten Ort erzeugt,
- das erste Ultraschallsignal wird in zwei Teilsignale aufgeteilt, welche in zwei unterschiedliche Richtungen umgelenkt werden,
- die Teilsignale werden auf einen, insbesondere im wesentlichen gemeinsamen und/oder ringförmigen, geschlossenen Schallwegen, die zumindest teilweise innerhalb des Mediums liegen, einander entgegengerichtet zum ersten Ort zurückgeführt,
- aus den beiden Teilsignalen wird die Fließgeschwindigkeit ermittelt.

Für dieses Verfahren wird lediglich ein Ultraschallkopf benötigt, der wiederum auch nur eine Sende-/Empfangseinrichtung benötigt und nur für eine einseitige Abstrahlrichtung ausgebildet sein muß. Damit ist der Aufwand für aktive Bauteile der Anordnung sehr gering. Zusätzlich wird auch keine Umschaltung der Schallköpfe beim wechselseitigen Senden und Empfangen nötig, so daß auch hier eine vereinfache Verfahrensweise gegeben ist. Da auch keine Sendekopfpaare erforderlich sind, entfällt der Aufwand für eine paarweise Selektierung der Ultraschallköpfe. Insgesamt ist also durch die neue Verfahrensweise eine wesentliche Vereinfachung und Verkleinerung der Anordnung gegenüber dem Stand der Technik gegeben.

Dabei ist es günstig, wenn aus den beiden Teilsignalen zunächst ein Summensignal ermittelt wird. Dieses erfolgt in einfacher Weise dadurch, daß beide Signale gemeinsam mit dem einen Ultraschallkopf empfangen werden. Hieraus läßt sich die Fließgeschwindigkeit einfach ermitteln.

Mit Vorteil kann die ermittelte Fließgeschwindigkeit zur Berechnung eines Volumens oder auch einer Wärmemenge dienen. Dazu wird die Fließgeschwindigkeit mit einer entsprechenden Konstanten für ein entsprechendes Meßrohr und/oder einem Temperaturwert des Mediums verknüpft. Somit sind auf einfache Weise weitere Informationen über das fließende Medium ermittelbar.

Die Fließgeschwindigkeit wird dabei auf einfache Weise derart ermittelt, daß die Differenz zwischen der ursprünglichen Impulsbreite des Ultraschallsignals und der Impulsbreite des Summensignals mit dem Quadrat der Ultraschallgeschwindigkeit multipliziert wird. Es erfolgt anschließend noch eine Division durch die doppelte effektive Meßstreckenlänge innerhalb des Mediums. Eine Präzisierung dieser Wegstreckenlänge erfolgt noch später in der Beschreibung. Somit ist eine einfach zu handhabende Beziehung gegeben, mit der leicht die Fließgeschwindigkeit ermittelt werden kann. Bevorzugt haben die beiden Schallwege zumindest teilweise einen gemeinsamen Verlauf. Damit ist ein besonders einfacher Aufbau gegeben.

Bezüglich der Anordnung wird die Aufgabe erfindungsgemäß gelöst mit:

- einem Ultraschallkopf, einem Doppelreflektor und einem Meßrohr,
- wobei ein Ultraschallsignal des Ultraschallkopfes zur Erzeugung zweier Teilsignale auf den Doppelreflektor richtbar ist, und
- wobei das Meßrohr zumindest zwei weitere Reflektoren umfaßt, die zusammen mit dem Doppelreflektor einen ringförmigen Schallweg bilden, der zumindest teilweise innerhalb des Meßrohres im Medium verläuft.

Somit ist eine einfache Anordnung gegeben, die nur einen einfachen Schallkopf benötigt. Weitere Vorteile der Anordnung ergeben sich sinngemäß zum obengenannten Verfahren.

Mit Vorteil ist der Doppelreflektor außerhalb des Meßrohres angeordnet, wobei das Meßrohr zwei Fenster für den Schallweg aufweist. Damit ist das Meßrohr nahezu einbautenfrei, wodurch die Strömung im Meßrohr nicht behindert ist.

Es ist günstig, wenn der Schallweg innerhalb des Meßrohres im wesentlichen etwa zickzackförmig oder geradlinig verläuft. Damit ergeben sich auch für diese Anordnung je nach Anwendungsfall die aus dem Stand der Technik bekannten Vorteile zusätzlich.

Das Meßrohr kann etwa im Bereich zwischen den beiden Fenstern etwa U-förmig ausgeführt sein. Damit ist der Signalweg oder der Meßkanal besonders günstig ausgestaltet und läßt eine einfache Anordnung von Schallkopf und Doppelreflektor zu.

Der Ultraschallkopf kann ein- oder zweiteilig ausgeführt sein, wobei die einteilige Form aus Einfachheitsgründen bevorzugt ist. Die zweiteilige Form zur Abstrahlung von zwei Teilsignalen kann für Sonderfälle denkbar sein. Insgesamt wird dabei nur eine gemeinsame Sende-/Empfangseinrichtung zum Ansteuern des Ultraschallkopfes benötigt.

Optional kann ein Temperatursensor vorgesehen sein, der ein Temperatursignal liefert, welches zusammen mit der ermittelten Fließgeschwindigkeit zur Ermittlung einer Wärmemenge dient. Damit ist eine weitergehende Verwendung gegeben.

Wesentliche Vorteile der Erfindung sind:

- Da nur ein Schallkopf benötigt wird, ergeben sich ein nur geringer Materialaufwand und dadurch bedingt geringe Herstellkosten.

- Da keine Paarung von Schallköpfen erforderlich ist, sind die Kosten pro Schallkopf ebenfalls gering.

- Es ist keine Umschaltung von Sende- und Empfangseinheiten zwischen zwei verschiedenen Schallköpfen erforderlich.

- Schallkopfunsymmetrien, z.B. für eine doppelseitige Abstrahlung, die sich auf die Meßgenauigkeit und die Meßtechnik auswirken, sind nicht mehr gegeben.

- Das Volumenmeßteil oder die Anordnung insgesamt kann insgesamt kleiner und mit geringerem mechanischem Aufwand hergestellt werden.

Ausführungsbeispiele, weitere Vorteile und Details der Erfindung werden nachfolgend anhand der Zeichnung näher erläutert. Es zeigen:

Figur 1    eine erste Anordnung zur Ermittlung der Fließgeschwindigkeit eines Mediums,
Figur 2    ein Impulsdiagramm zur Erläuterung der Funktion der Anordnung,
Figur 3    eine zweite Anordnung mit alternativem Schallwegverlauf,
Figur 4    eine dritte Anordnung mit U-förmigem Meßrohr, und
Figur 5    eine vierte Anordnung mit gesteuerten Schallwegen.

Gleiche Details in den Figuren sind nachfolgend mit gleichen oder sinngemäß ähnlichen Bezugszeichen gekennzeichnet.

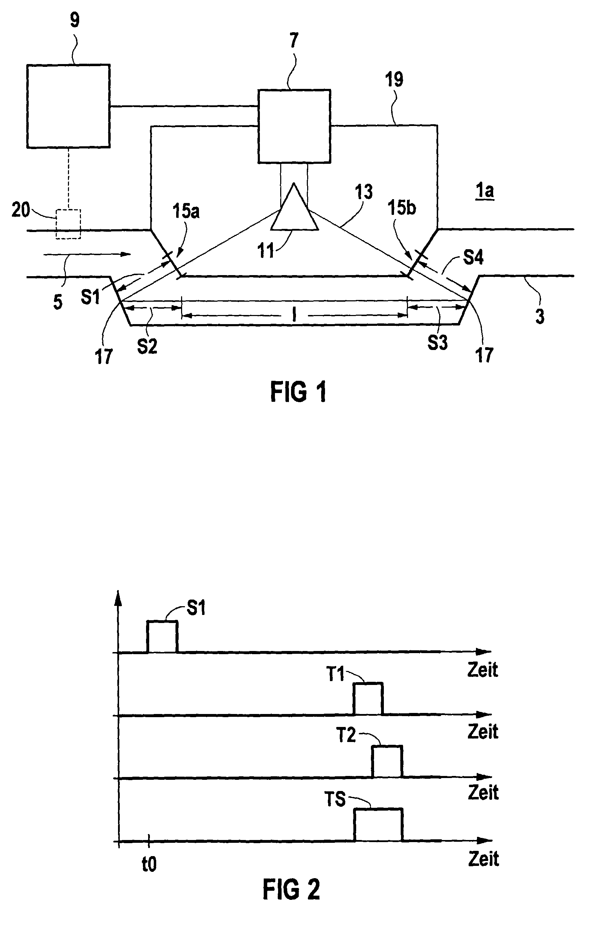

Figur 1 zeigt eine erste Anordnung 1a zur Messung der Fließgeschwindigkeit eines Mediums. Als Medium kommen dabei z.B. Wasser, Gas oder sonstige flüssige oder gasförmige Medien in Frage. Die Fließgeschwindigkeit wird dabei insbesondere zur Ermittlung einer Durchflußmenge, z.B. bei einer Volumenmeßvorrichtung, oder einer Wärmemenge, wie z.B. bei der Verbrauchserfassung bei Haushalten, benötigt.

Das Medium fließt vorliegend durch ein Meßrohr 3 in Richtung des Pfeils 5. Zur Messung wird vorliegend Ultraschall verwendet, der mittels eines Ultraschallkopf, nachfolgend als Schallkopf 7 bezeichnet, erzeugt wird. Der Schallkopf 7 ist elektrisch mit einer Sende-/Empfangseinrichtung 9 verbunden. Diese dient einerseits zur Ansteuerung des Schallkopfes 7 und andererseits zur Auswertung der vom Schallkopf 7 empfangenen Impulse. Der Schallkopf 7 weist also eine Sende- und Empfangsfunktion auf und kann beispielsweise ein Piezoelement als aktives Element umfassen.

Das vom Schallkopf 7 abgegebene Ultraschallsignal trifft zunächst auf einen Doppelreflektor 11, der quasi nach Art eines Prismas ausgebildet ist. Der Doppelreflektor 11 hat die Funktion, das Ultraschallsignal in zwei Teilsignale aufzuteilen und diese in einander entgegengerichtete Richtungen auf jeweilige Schallwege zu lenken. Die beiden Schallwege sind dabei in der Regel, zumindest im Bereich einer vorgegebenen Meßstrecke innerhalb des Mediums, identisch und sind in der Figur 1 durch den Schallweg 13 gekennzeichnet. Es kann also von einem gemeinsamen Schallweg 13 für beide Richtungen gesprochen werden.

Die Teilsignale werden vom Doppelreflektor 11 durch jeweilige Fenster 15a bzw. 15b in der Wandung des Meßrohres 3 in dieses eingeleitet. Innerhalb des Meßrohres 3 erfolgt eine Reflektion der Teilsignale mittels der in die Wandung des Meßrohres 3 integrierten Reflektoren 17, so daß eine Schallausbreitung entlang des Fließrichtung des Mediums gegeben ist. Die Rückführung der Teilsignale erfolgt sinngemäß auf einem symmetrischen Weg zum Schallkopf 7 zurück, so daß quasi ein geschlossener Schallweg 13 gegeben ist.

Die Führung des Mediums im Meßrohr 3 kann wie gezeigt um ein Meßteil 19, das im wesentlichen zur Halterung des Schallkopfes 7 am Meßrohr 3 dient, in gebogener oder auch in gerader Streckenführung erfolgen. Bei gerader Streckenführung sind dann gegebenenfalls die Reflektoren und Fenster zur Schallführung entsprechend anzupassen. Die Reflektoren können gegebenenfalls auch als selbständige Bauteile in dem Mediumfluß angeordnet sein.

Zur Funktion wird wie folgt verfahren:

Der Schallkopf 7 gibt zunächst das Ultraschallsignal, insbesondere einen Schallimpuls, ab, das als zwei Teilsignale den ringförmigen Schallweg 13 in beide Richtungen durchläuft, die dann wieder auf den Schallkopf 7 auftreffen und von diesem empfangen werden. Der Schallkopf 7 wird dabei von der Sende-/Empfangseinrichtung 9 von der Sendefunktion in den Empfangsbetrieb umgeschaltet.

Durch das strömende Medium erfahren die beiden Teilsignale eine Beschleunigung bzw. eine Verzögerung zueinander. Die Signalverläufe sind in Figur 2 am Beispiel von Rechteckimpulsen naher erläutert. S1 stellt dabei das vom Schallkopf 7 gesendete Schallsignal zum Zeitpunkt to dar. T1 und T2 stellen die in einander entgegengerichteter Richtung ausgestrahlten Teilsignale dar, die vom Schallkopf 7 wieder empfangen werden. Das mit der Strömungsrichtung laufende Teilsignal T1 ist gegenüber dem Teilsignal T2 beschleunigt oder schneller am Schallkopf 7.

Durch den gemeinsamen Empfang am Schallkopf 7 bildet dieser ein Summensignal TS, das einer Überlagerung beider Teilsignale T1 und T2 im Sinne einer Addition entspricht. Diese "additive Überlagerung" ist als logische "oder-Verknüpfung" ausgeführt. In der Praxis kann hierzu ein Addierer mit Begrenzerfunktion verwendet werden. Aus diesem Summensignal TS wird nachfolgen in der Sende-/Empfangseinrichtung 9 die Fließgeschwindigkeit des Mediums ermittelt.

Die Berechnung oder Ermittlung der Fließgeschwindigkeit und der daraus resultierenden Durchflußmenge erfolgt nach den nachfolgend beschriebenen Gesichtspunkten beispielhaft für die Anordnung gemäß Figur 1. Für die übrigen Ausführungen müssen ggf. Anpassungen der Beziehungen, insbesondere im Hinblick auf die unterschiedlichen Wegstrecken, vorgenommen werden.

Allgemein gilt die Beziehung

$$\text{Zeit (t)} = \text{Weg (s) durch Geschwindigkeit (v)} \quad (t = s/v). \qquad (1)$$

Die Geschwindigkeit v1 des Ultraschallsignals in Flußrichtung des Mediums ist gegeben durch:

$$v1 = c + v \qquad (2)$$

wobei c die Schallgeschwindigkeit und v die Fließgeschwindigkeit des Mediums sind.

Die Geschwindigkeit v2 des Ultraschallsignals entgegen der Flußrichtung des Mediums ergibt sich zu:

$$v2 = c - v \qquad (3)$$

Die Laufzeit $\Delta t$ wird unter Anwendung der obengenannten Formeln (1), (2) und (3) wie folgt ermittelt:

$$\Delta t = t2 - t1 = \frac{1}{v2} \cdot \frac{1}{v1} = \frac{1}{c-v} \cdot \frac{1}{c+v} = l \cdot \frac{c+v-c+v}{c^2-v^2} = 2l \cdot \frac{v}{c^2-v^2} \approx 2l \cdot \frac{v}{c^2} \qquad (4)$$

Daraus ergibt sich, daß $\Delta$t ungefähr proportional zu v ist.
Für die restlichen Laufwege gilt:

$$\Delta t = \Delta t_{Linksdrehung} + \Delta t_{Rechtsdrehung} = \frac{2v}{c^2} \cdot (-s1+s2+s3-s4) + \frac{2v}{c^2} \cdot (s1-s2-s3+s4) = 0 \qquad (6)$$

In Formel (6) sind die Wegstrecken negativ angenommen, bei denen eine Komponente antiparallel zum Durchflußvektor verläuft und positiv, wenn eine Komponente in Richtung des Durchflußvektors zeigt. Zu den in Formel (6) angegebenen Wegstrecken s1 bis s4 wird auf Figur 1 verwiesen.

Ausgehend von verwendeten Rechteckimpulsen gemäß Figur 2 ergibt sich die Impulsbreite des empfangenen Summensignals TS zu

$$\Delta TS = \Delta t1 - \Delta ta \qquad (7)$$

wobei $\Delta$t1 die Impulsbreite des Sendeimpulses und $\Delta$ta der durchflußabhängige Anteil sind.

Durch Zusammenführung der Formeln (4) und (7) ergibt sich

$$v = \frac{c^2}{2l} \cdot (\Delta TS - \Delta t1). \qquad (8)$$

Damit ist eine einfache Formel für die Fließgeschwindigkeit des Mediums gegeben, aus der sich mittels an sich bekannter mathematischer Methoden die durchfließende Menge (Multiplikation mit der durchströmten Fläche) ermitteln läßt.

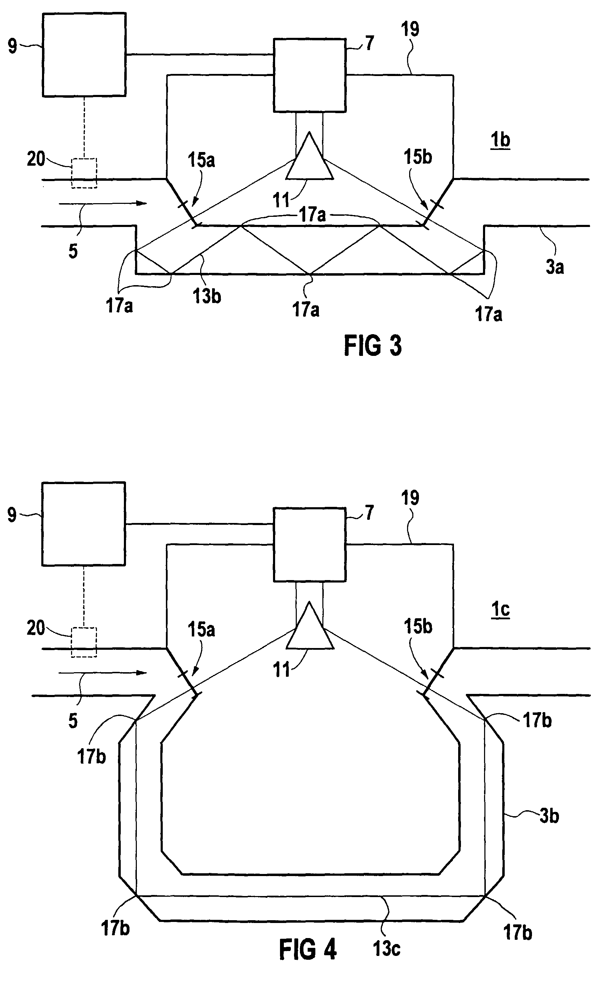

Die Figuren 3 und 4 zeigen alternative Anordnungen mit unterschiedlichen Meßkanälen, die eine unterschiedliche Schallführung erlauben.

Die Anordnung 1b gemäß Figur 3 weist gegenüber Figur 1 einen zickzackförmigen Schallweg 13b mit Mehrfachreflexionen innerhalb des Meßrohrs 3 auf. Dabei sind die allgemein bekannten Vorteile einer zickzackförmigen Schallführ-rung gegeben.

Figur 4 weist ein U-förmiges Meßrohr 3b auf, bei dem der Schallweg 13 c im wesentlichen geradlinig innerhalb des fließenden Mediums geführt ist. Bei dieser Ausführung ist kennzeichnend, daß die eigentliche effektive Meßstrecke besonders lang ist, und daß dabei das Ultraschallsignal lange im Medium verweilt, so daß eine relativ hohe Meßgenauigkeit erzielt wird. Bei beiden Ausführungen gemäß Figuren 3 und 4 ist jedoch von dem Prinzip Gebrauch gemacht, daß lediglich nur ein Schallkopf 7 mit einer Abstrahlrichtung zur Anwendung kommt.

Gegebenenfalls kann das im Sinne eines Anordnungs- oder Grundkörpers dienende Meßteil 19 aus einem schall-leitenden Material gefertigt sein, so daß eine gute Signaleinkopplung in das Meßrohr 3 gegeben ist. Dabei muß dann der Doppelreflektor 11 eingearbeitet sein.

Alternativ kann das Meßteil 19 auch hohl ausgebildet und mit dem Medium selbst ausgefüllt sein, wobei das Medium jedoch innerhalb des Meßteils 19 dann ruht. Die Fenster 15a und 15b können dabei dann als einfache Öffnungen ausgebildet sein, so daß eine gute Einkopplung des Schallsignals gegeben ist.

Selbstverständlich lassen sich die aufgeführten Merkmale und Details auch wahlweise miteinander oder mit Merkmalen aus dem Stand der Technik kombinieren, ohne daß die grundlegende Idee verlassen wird. Wesentlich für die Idee ist, daß unabhängig vom realisierten Schallweg die Schalleinkopplung unter Verwendung nur eines einzigen Schallkopfes realisiert ist. Dabei ist dann einfache meßtechnische Auswertung gemäß der obengenannten Beziehungen gegeben.

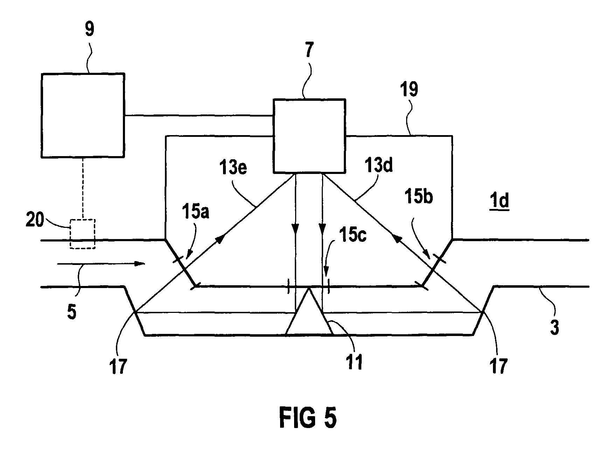

Figur 5 zeigt eine Anordnung 1d, bei der ausgehend von der Anordnung 1a von Figur 1 zwei getrennte Schallwege 13d,13e vorgesehen sind. Der Doppelreflektor 11 ist dabei innerhalb des Meßrohres 3 angeordnet. Das erste Ultraschallsignal wird daher durch ein Fenster 15c auf den Doppelreflektor gerichtet. Der weitere Verlauf der Schallwege 13d und 13e ergibt sich im weiteren analog zu der Ausführung gemäß Figur 1.

Obwohl die Schallwege 13d und 13e in dieser Ausführung nicht gleich sind, ist eine Berechnung der Fließgeschwindigkeit möglich, da die effektiven Meßwege innerhalb des Mediums vergleichbar sind und vom gleichen Mediumfluß durchströmt sind. Gegebenenfalls kann der Doppelreflektor 11 auch - wie übrigens bei allen Ausführungen - zweigeteilt sein und eventuell in der Wandung des Meßrohres 3 integriert sein.

Gemäß der neuen Anordnung und dem neuen Verfahren ergeben sich folgende Vorteile gegenüber dem bisherigen Stand der Technik:

- Da nur ein Schallkopf benötigt wird, ergibt sich ein geringer Materialaufwand und dadurch bedingt geringe Herstellkosten.

- Da keine Paarung von Schallköpfen erforderlich ist, sind die Kosten pro Schallkopf ebenfalls gering.

- Es ist keine Umschaltung von Sende- und Empfangseinheiten zwischen zwei verschiedenen Schallköpfen erforderlich.

- Schallkopfunsymmetrien, z.B. für eine doppelseitige Abstrahlung, die sich auf die Meßgenauigkeit und die Meßtechnik auswirken, sind nicht gegeben.

- Das Volumenmeßteil oder die Anordnung insgesamt kann insgesamt kleiner und mit geringerem mechanischem Aufwand hergestellt werden.

**Patentansprüche**

1. Verfahren zur Messung der Fließgeschwindigkeit eines Mediums mit folgenden Schritten:

   - es wird ein erstes Ultraschallsignal an einem ersten Ort erzeugt,
   - das erste Ultraschallsignal wird in zwei Teilsignale aufgeteilt, welche in zwei unterschiedliche Richtungen umgelenkt werden,
   - die Teilsignale werden einander entgegengerichtet auf jeweiligen ringförmigen Schallwegen, die zumindest teilweise innerhalb des Mediums liegen, zum ersten Ort zurückgeführt,
   - aus den beiden Teilsignalen wird die Fließgeschwindigkeit ermittelt.

2. Verfahren nach Anspruch 1, wobei aus den beiden Teilsignalen ein Summensignal erzeugt wird, aus dem die Fließgeschwindigkeit ermittelt wird.

3. Verfahren nach Anspruch 1 oder 2, wobei die Schallwege im wesentlichen zickzackförmig oder geradlinig durch das Medium verlaufen.

4. Verfahren nach einem der Ansprüche 1 bis 3, wobei als Ultraschallsignal ein Ultraschallimpuls erzeugt wird.

5. Verfahren nach Anspruch 4, wobei die Fließgeschwindigkeit aus der Differenz zwischen der Impulsbreite des Summensignals und des ersten Ultraschallsignals multipliziert mit dem Quadrat der Schallgeschwindigkeit und dividiert durch die doppelte effektive Meßstreckenlänge innerhalb des Mediums ermittelt wird.

6. Verfahren nach einem der Ansprüche 1 bis 5, wobei zur Ermittlung einer Durchflußmenge die Fließgeschwindigkeit mit der durchströmten Fläche multipliziert wird.

7. Verfahren nach einem der vorhergehenden Ansprüche, wobei zur Ermittlung einer Wärmemenge die Fließgeschwindigkeit mit einem Temperaturwert des Mediums verknüpft wird.

8. Verfahren nach einem der Ansprüche 1 bis 7, wobei die beiden Schallwege zumindest teilweise einen gemeinsamen Verlauf haben.

9. Anordnung zur Messung der Fließgeschwindigkeit eines Mediums mit

   - einem Ultraschallkopf (7), einem Doppelreflektor (11) und einem Meßrohr (3, 3a, 3b),
   - wobei ein Ultraschallsignal des Ultraschallkopfes (7) zur Erzeugung zweier Teilsignale auf den Doppelreflektor (11) richtbar ist,
   - wobei das Meßrohr (3, 3a, 3b) zumindest zwei weitere Reflektoren (17, 17a, 17b) umfaßt, die zusammen mit dem Doppelreflektor (11) einen geschlossenen Schallweg (13, 13a, 13b) bilden, der zumindest teilweise innerhalb des Meßrohres im Medium verläuft.

**10.** Anordnung nach Anspruch 9, wobei der Doppelreflektor (11) außerhalb des Meßrohres (3, 3a, 3b) angeordnet ist und das Meßrohr (3, 3a, 3b) zwei Fenster (15a, 15b) für den Schallweg (13, 13a, 13b) aufweist.

**11.** Anordnung nach Anspruch 9 oder 10, wobei der Schallweg (13, 13a, 13b) innerhalb des Meßrohres (3, 3a, 3b) im wesentlichen etwa zickzackförmig oder geradlinig verläuft.

**12.** Anordnung nach einem der Ansprüche 9 bis 11, wobei das Meßrohr (3b) etwa im Bereich zwischen den beiden Fenstern (15a, 15b) etwa U-förmig ausgeführt ist.

**13.** Anordnung nach einem der Ansprüche 9 bis 12, wobei der Ultraschallkopf (7) ein- oder zweiteilig ausgeführt ist.

**14.** Anordnung nach einem der Ansprüche 9 bis 13, wobei eine Sende-/Empfangseinrichtung (9) zum Ansteuern des Ultraschallkopfes (7) vorgesehen ist.

**15.** Anordnung nach einem der Ansprüche 9 bis 14, wobei ein Temperatursensor (20) vorgesehen ist, der ein Temperatursignal liefert, welches zusammen mit der ermittelten Fließgeschwindigkeit zur Ermittlung einer Wärmemenge dient.

**FIG 1**

**FIG 2**

**FIG 3**

**FIG 4**

**FIG 5**

| | Europäisches Patentamt | EUROPÄISCHER RECHERCHENBERICHT | Nummer der Anmeldung EP 97 12 0637 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,X | WO 95 19559 A (PANAMETRICS)<br><br>* Seite 12, Zeile 12 - Zeile 35; Abbildungen 10,10A,11,11A *<br>--- | 1,3,4,6, 7,9,13, 14 | G01F1/66 |
| A | US 4 069 433 A (MCSHANE JAMES L)<br>* Anspruch 1; Abbildung 1B *<br>--- | 10 | |
| D,A | EP 0 566 859 A (HYDROMETER GMBH)<br>* Zusammenfassung; Abbildung 3 *<br>----- | 1,9 | |

RECHERCHIERTE SACHGEBIETE (Int.Cl.6)

G01F
G01P

Der vorliegende Recherchenbericht wurde für alle Patentansprüche erstellt

| Recherchenort | Abschlußdatum der Recherche | Prüfer |
|---|---|---|
| BERLIN | 16.Februar 1998 | Vorropoulos, G |